# EUROPEAN PATENT APPLICATION

(11) **EP 4 741 098 A2**
(43) Date of publication of application: **13.05.2026**
(21) Application number: 25213766.6
(22) Date of filing: 05.11.2025
(51) Int. Cl.: B23Q 3/06, B25B 1/10, B23Q 3/18

(54) **WORK HOLDING DEVICE**

(30) Priority: 06.11.2024 US 202418938468
(71) Applicant: Brinkman Products, Inc., Rochester, New York 14611 (US)
(72) Inventor: Fonda, Brian, Marion, 14505 (US); Robinson, Daniel M., Rochester, 14624 (US)
(74) Representative: Forresters IP LLP

(57) **Abstract**

A work holding device for removably attaching work pieces to the device. The work pieces may be provided with elongated wedge shaped channels along two sides thereof and an indexing aperture on their bottom surfaces. The work holding device has a body with one or more open slots for receiving clamping assemblies and has a first and second cavity configured to receive spring-biased locating pins. The one or more open slots may have the shape of a rounded polygon in cross section. The clamping assemblies have first and second wedge portions that engage with the channels on the sides of the work pieces to hold the work piece in position during machining operations. The materials and construction of the work holding device provide for strength, stability and precise positioning to optimize machining operations and reduce errors and waste.

## Description

### TECHNICAL FIELD

The present invention relates to a work holding device for rigidly clamping a work piece for machining, and in particular to a device capable of securely supporting work pieces of varying size that is suitable for numerically controlled machining applications.

### BACKGROUND ART

When raw material, or partially fabricated components, are to be machined, the work piece must be securely clamped to a base plate or some other manufacturing platform to hold the work piece stable at a precise, predictable position in a manner capable of resisting the forces on the work piece produced by the machining operation to be performed. Typical machining operations include drilling, boring, honing, grinding and milling. In computer numerically controlled (CNC) machining, for example, a machine tool such as a milling head is programmed to follow a very precise path. The work piece must be located extremely precisely relative to the CNC machine datum points/planes from which the machining path is related or measured.

A number of different indexing and clamping systems have been developed to permit a work piece to be positioned at a specific location on a support plate. Frequently, the clamping means have fingers, jaws, straps or other means that extend over the side of the workpiece opposite the supporting surface. While generally effective, the upper surface clamps must be carefully positioned to avoid interference with the movement of the machine tool, such as a milling head, across the work piece. The upper surface clamping means also restrict the access of the cutting tools, such as end mills, to a portion of the work piece.

Insufficient clamping pressure, or the use of too few clamps, may allow the work piece to shift during machining, resulting in wasted, out-of-tolerance products and potential damage to the machine tool. Too much clamping pressure may result in damage to the work piece either directly, or by elastically deforming the work piece resulting in out-of-tolerance machining operations. Further, errors in clamp placement may result in damage to the clamps, to the cutting tools, and to the machine tool.

In many work piece operations, it is desirable to use a work holder that is equipped with jaws and a work surface that are at least as wide as the work piece being machined to insure that the work piece is adequately supported during the machining operation. Moreover, with increasing use of numerically controlled machines the work piece must be clamped to the work platform at a very precise, or indexed, location so that the preprogrammed machining process will produce the desired operations. It is frequently desirable to present multiple work pieces to the machining apparatus, and to be able to machine all surfaces of the work piece in a single operation, in order to reduce the amount of machine set-up and tool-change time. However, because the width of the work surface and the jaws of prior art work holding vises cannot be expanded to accommodate wider work pieces or pluralities of work pieces, the user may be forced to inventory a number of various sized work holders. Such work holders may typically cost several hundred dollars and, thus, the average machine owner cannot afford to maintain an extensive inventory of such work holder devices. It may also be beneficial to be able to remove a work piece from the clamping apparatus for inspection or other purposes, and then return it to precisely the same position on the work holder.

There is a continuing need for improved indexing and clamping systems for work pieces to be machined. In particular, there is a need for an improved system that will reliably hold a work piece, without slippage, in a manner that leaves most of the work piece surface accessible for machining operations.

### BRIEF SUMMARY OF THE INVENTION

With parenthetical reference to the corresponding parts, portions or surfaces of the disclosed embodiment, merely for the purposes of illustration and not by way of limitation, the present invention provides a work holding device (10) for removably attaching a work piece (400) to a mounting surface (22) for machining.

The work piece(400) may be provided with elongated wedge shaped channels (409) along two sides thereof and at least one indexing aperture (415) on its bottom surface (403). The work holding device (10) comprises a main body (13) having a proximal end (16), a distal end (19), and a mounting surface (22) disposed between the proximal and distal ends (16, 19). The body (13) includes a plurality of elongated, rounded polygonal openings (28) extending transversely there through and having a portion that intersects the mounting surface (22) thereby defining a plurality of open slots (43) in the mounting surface (22). The body (13) includes a tie bar (46) that extends across a portion of the open slot (43) and a plurality of locating pin apertures (49) between said open slots (43) that extend downward into the body (13). The locating pin apertures (49) are configured to receive a spring-biased locating pin (52) having a first end (64) and a second end (67) disposed opposite the first end (64). The first end (64) of the spring-biased locating pin (52) is sized to slidably insert into the at least one indexing aperture (415) of the work piece (400).

A plurality of clamp assemblies (61) are insertable into the rounded polygonal openings (28). The clamp assemblies (61) comprise a clamp rod (200) having a body (203) and an enlarged head (206). The body (203) has threads (209) along a portion of its length, and the enlarged head (206) has means (280) for turning the rod (200). A first clamp dog (212) having a threaded aperture (215) there through engages with the clamp rod (200). A first wedge portion (55) protrudes through the open slot (43) when the clamp assembly (61) is inserted into one of said rounded polygonal openings (28). A second clamp dog (221) has an opening (224) configured to receive the body of clamp rod (200) slidably therethrough. The enlarged portion of the clamp rod (200) engages with the second clamp dog (221) around the opening and a second wedge portion (58) protrudes through said open slot (43) when said clamp assembly (61) is inserted into one of said rounded polygonal openings (28). First and second springs (227) and (228) are disposed around the clamp rod (200) between the first clamp dog (212) and second clamp dog (221). The springs (227) and (228) are disposed on opposite sides of a dividing section (250) having an opening (255).

The system may further comprise platforms (25) extending above the mounting surface (22).

In another aspect, when the work piece (400) is mounted on the work holding device (10) the bottom surface (403) of the work piece (400) engages the mounting surface (22) and the platforms (25).

A further aspect comprises a tie bar (46) that extends across a portion of the open slot (43).

In yet another aspect, the first spring (227) and the second spring (228) are coil springs.

In another aspect, the body (13) is constructed of cast iron.

In yet another aspect at least a portion of the openings (28) are shaped in the form of a rounded polygon.

In another aspect the plurality of apertures (49) have different diameters.

In another aspect the means (280) for turning the rod (200) comprises a hex shaped opening in the head (206) of rod (200).

In another embodiment, the invention comprises a work holding device (10) for removably attaching work pieces (400) having elongated wedge-shaped channels (409) along two sides thereof and at least one indexing aperture (415) on its bottom surface (403). The work holding device (10) includes a main body (13) having a proximal end (16) , a distal end (19), and a mounting surface (22) disposed between the proximal and distal ends (16, 19).

The body (13) includes a plurality of elongate openings (28) extending transversely therethrough and having a portion that intersects the mounting surface (22) thereby defining a plurality of open slots (43) in the mounting surface (22).

A plurality of locating pin apertures (49) are disposed between said open slots (43). The locating pin apertures (49) border a cavity (73) in the body (13). The cavity (73) is configured to receive a locating pin (52) having a first end (64) and a second end (67) disposed opposite the first end (64). The locating pin (52) has a shoulder (56) defined between the first end (64) and the second end (67). The first end (64) of the locating pin (52) is sized to slidably insert into the at least one indexing aperture (415) of the workpiece (400).

One or more platforms (25) extend above the mounting surface (22).

One or more tie bars (46) extend across the plurality of open slots (43) in the mounting surface (22).

A biasing member (85) is disposed in the cavity (73) and is configured to bias the locating pin (52) in the upward direction.

A retaining ring (300) is disposed in the cavity (73) and is configured to engage the shoulder (56) on the locating pin (52) to prevent it from exiting the cavity (73).

A plurality of clamp assemblies (61) are configured to be inserted in the elongate openings (28) and to engage the wedge-shaped channels (409) in the work piece (400).

The plurality of openings (29) have a cross-section that includes the shape of a rounded polygon such as a triangle.

### BRIEF DESCRIPTION OF THE DRAWINGS

FIG. 1 is a perspective view of one embodiment of the work holding device.
FIG. 2 is a partial perspective view of the embodiment shown in FIG. 1.
FIG. 3 is a top plan view of the embodiment shown in FIG. 1.
FIG. 4 is a cross-sectional view taken along lines 4-4 of FIG. 3.
FIG. 5 is an enlarged view of the cross section shown in FIG. 4.
FIG. 6 is an enlarged view of a portion of FIG. 4 with the locating pins retracted beneath the mounting surface.
FIG. 7 is top perspective view with the locating pins and assembly shown in an exploded view.
FIG. 8 is a cross-sectional view of the clamp dog assembly taken along lines 8-8 of FIG. 3.
FIG. 9 is an exploded view of the clamp assemblies.
FIG. 10 is a fragmentary sectional view showing a clamp dog prior to engagement with the wedge shaped channel on the work piece.
FIG. 11 is a fragmentary sectional view showing the engagement of a locating pin with an indexing aperture on the bottom surface of the work piece.

### DESCRIPTION OF THE PREFERRED EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, debris, etc.) together with the specification, and are to be considered a portion of the entire written description of this invention. As used in the following description, the terms "horizontal", "vertical", "left", "right", "up" and "down", as well as adjectival and adverbial derivatives thereof, (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or of rotation, as appropriate.

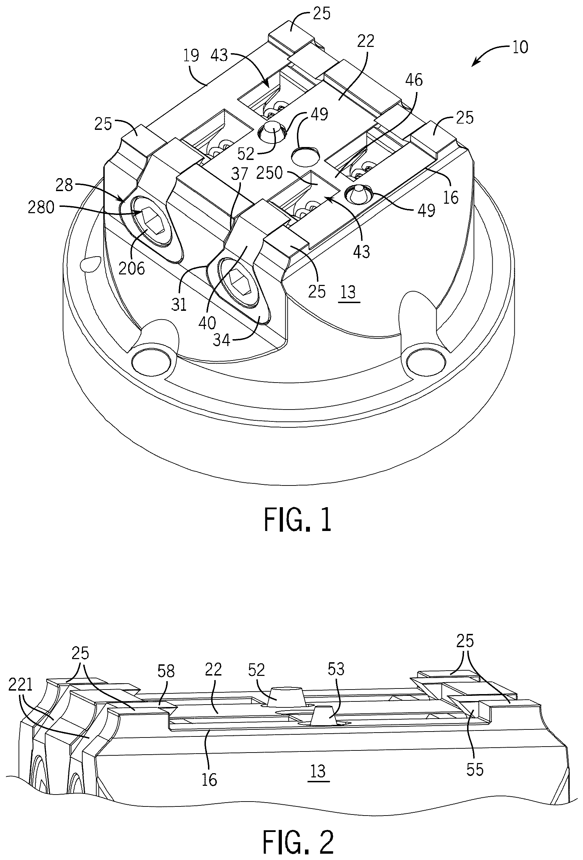

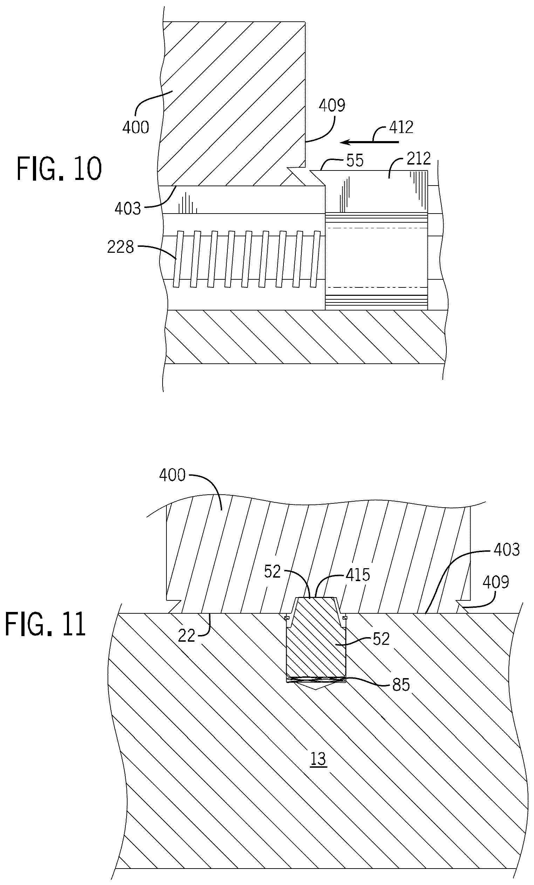

Referring now to the drawings, and more particularly to FIG. 1 thereof, this invention provides a work holding device 10. The work holding device 10 may be constructed of any suitable rigid material capable of providing sufficient strength and rigidity to withstand the clamping forces and the forces from the tools engaging a work piece. A preferred material is cast iron. The work holding device 10 includes a main body 13 having a proximal end 16 and a distal end 19. A mounting surface 22 may extend between the proximal end 16 and the distal end 19. The mounting surface 22 may be provided with raised platforms 25 along each side. The platforms 25 are configured to provide additional support and stability and dual contact with the bottom of the work piece 400 (FIGS. 10 and 11) which has a bottom surface 403 (FIG. 11) that engages with the mounting surface 22 and a laterally extending portion (not shown) that engages with the platforms 25 to provide additional support and stability during machining operations.

On the left side of the figure, a rounded polygonal opening 28 extends transversely from one side of the device 10 to the other side of the device 10. The rounded polygonal openings 28 have side walls 31 and 34 that extend inward to a pair of straight walls 37 and 40 that extend upward and terminate at the mounting surface 22. The elongate rounded polygonal openings 28 form a plurality of open slots 43 in the mounting surface 22. The elongate rounded polygonal opening 28 may take the form of a generally rounded triangular opening. The triangular opening provides for greater stability and wear resistance as the forces on the clamp assemblies 61 are spread across the angled side walls 31 and 34 inside the openings 28. A tie bar 46 extends across the open slots 43 to connect sections of the mounting surface 22 and to provide additional strength to the device 10.

The mounting surface 22 may also include a plurality of apertures 49 configured to receive locating pins 52 as will be described in greater detail herein.

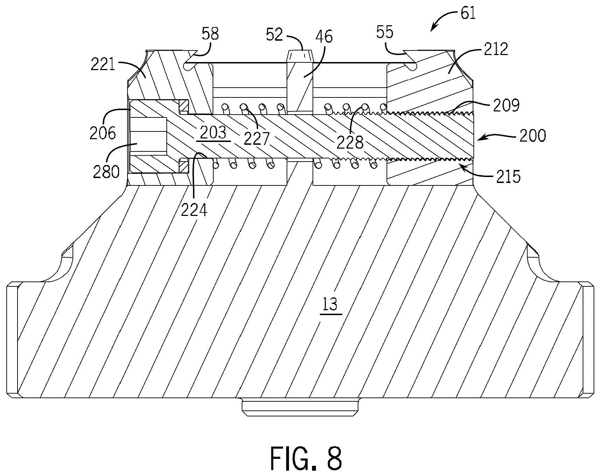

Turning to FIG. 2, the mounting surface 22 is shown from the proximal end 16. The mounting surface 22 is bordered by platforms 25 on the left and right hand side of the figure. The top of a locating pin 52 is shown extending upward from the middle of the mounting surface 22. Also wedge portions 55 and 58 of a clamp assembly 61 (best shown in FIGS. 8-9) are shown extending inward from each side of the mounting surface 22. The clamp assembly 61 is described in greater detail herein.

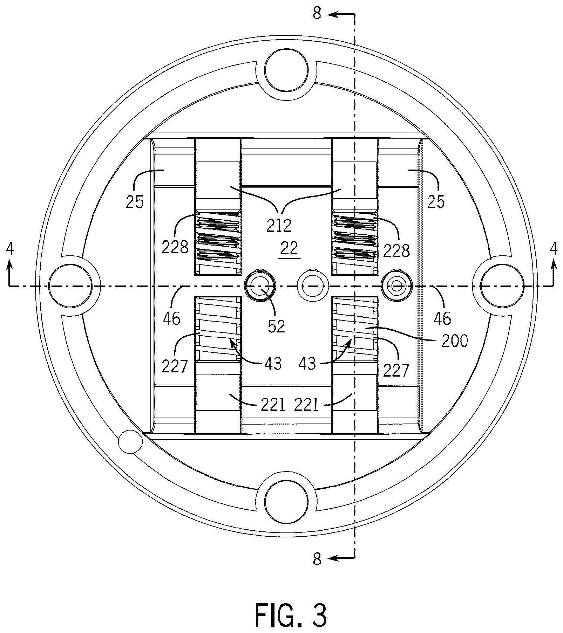

Turning to FIG. 3, a plan view shows the mounting surface 22 with a pair of open slots 43 having clamp assemblies 61 disposed therein. As shown the open slots 43 extend from one side of the mounting surface 22 to the other side. The clamp assemblies 61 extend in the slots 43 underneath the tie bar 46. As shown, a first clamping dog 212 is disposed in spaced apart relation to a second clamping dog 221. The first and second clamping dogs 212, 221 are operatively associated with a clamp rod 200 that may be surrounded by a first spring 227 and a second spring 228. The first and second clamping dogs 212, 221 include first and second wedge portions 55, 58 (best shown in FIG. 8) that are configured to engage with wedge-shaped channels 409 along the length of opposite sides of the work piece 400 to hold the work piece 400 in the device 10. The clamp assemblies 61 are described in greater detail herein below in connection with FIGS. 8-9.

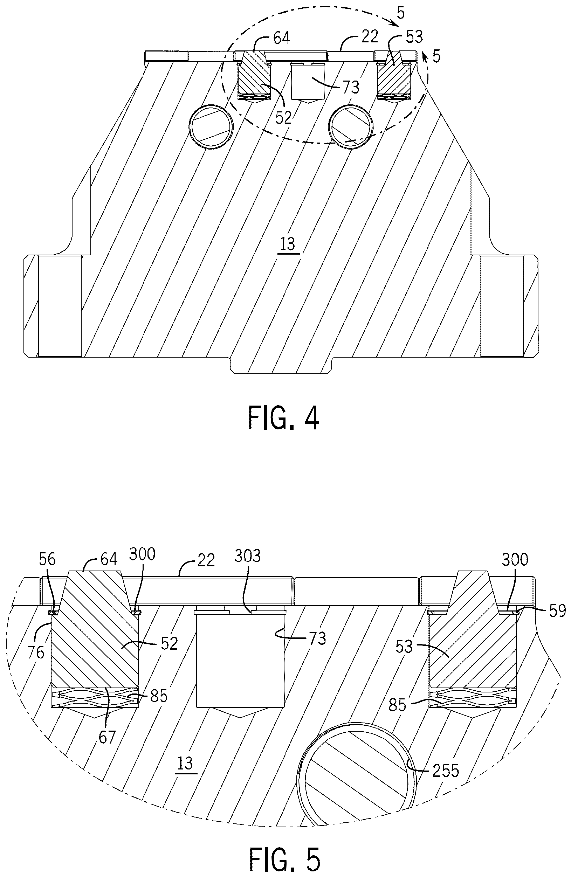

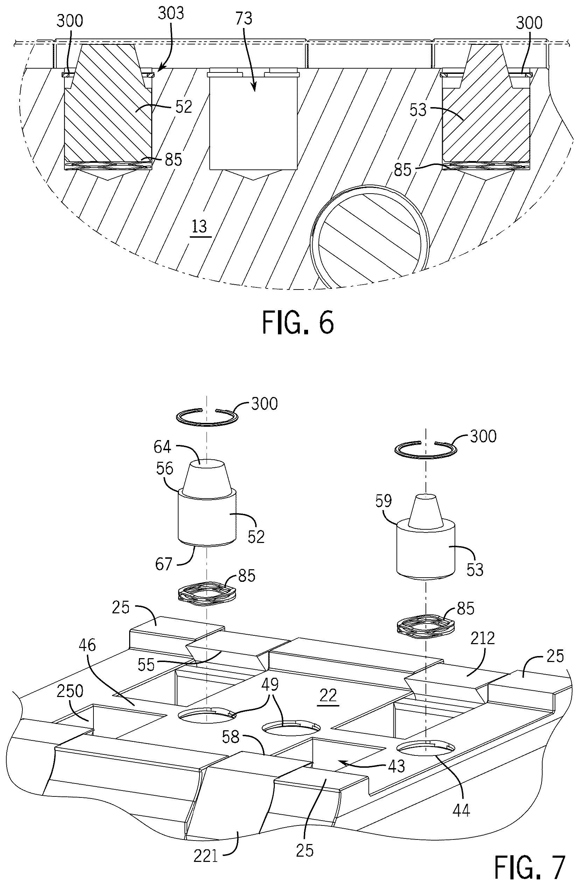

Turning to FIGS. 4-7, a plurality of locating pins 52, 53 are shown. The locating pin 52 has a first end 64 and a second end 67. The locating pin 52 extends downward through the aperture 49 into a cavity 73 (FIG. 4) in the main body 13. The locating pin 52 may be tapered outward from the first end 64 to a larger diameter portion 76. A biasing member 85 may be disposed in the cavity 73 underneath the pin 52 and adjacent to the second end 67 of the locating pin 52. The biasing member 85 provides an upward force such that the top surface 64 is spring biased in a position where it extends above the mounting surface 22. The biasing member 85 may be a coil spring or the like as will be evident to persons of ordinary skill in the art based on this disclosure. The locating pin 52 is held in the cavity 73 by a retaining ring 300 installed in a groove 303 in the cavity 73 near the top. The retaining ring 300 may be installed after inserting the biasing member 85 and the locating pin 52 into the cavity 73. The retaining ring 300 bears against a shoulder 56 (best shown in FIG. 7) formed on the locating pin 52 to prevent the locating pin 52 from exiting the cavity 73. Locating pin 53 may be provided with a shoulder 59 (FIG. 7) for the same purpose. Locating pin 53 may be of similar construction to locating pin 52 but with a different shaped profile. The different configurations for locating pin 52 and locating pin 53 provides for a specific location and orientation on a non-symettric blank/workpiece to prevent backward or bad loading on the work holding device 10.

The locating pins 52 and 53 may be pushed down into the cavity 73 against the force of the biasing member 85 such that the top surface 56 is at or below the height of the surface 22. The bottom surface 403 of the work piece 400 has at least one indexing aperture 415 disposed therein. The bottom surface 403 of the work piece 400 pushes the locating pin 52 down into the cavity 73 until the locating pin 52 aligns with one of the indexing apertures 415 at which point the locating pin 52 moves upward into the at least one indexing aperture 415 under the force of the biasing member 85 to fix the location of the work piece 400 on the work holding device 10. The purpose of the biasing member 85 is to ensure a tight locational fit between the tapered head of the locating pin 52, and the indexing aperture 415 which may also be tapered, regardless of minor size variation. This configuration ensures two things: the locating pin 52 does not prevent the bottom of the work piece 400 from firmly seating against surface 22; and the accurate and repeatable location. Also, in an embodiment with dissimilar sized or shaped locating pins, it ensures non-reversible orientation of the work piece 400.

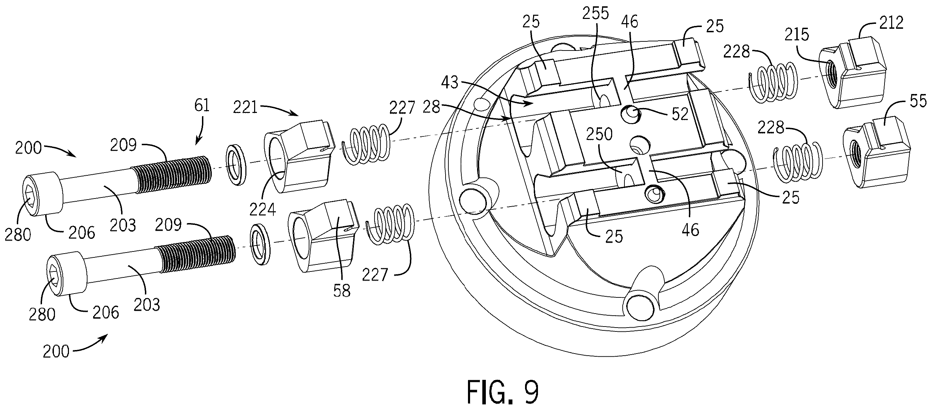

In FIGS. 8-9, a clamp assembly 61 is shown inserted through one of the open slots 43 in the main body 13. The clamp assembly 61 has a clamp rod 200 having a body 203 and an enlarged head 206. The body 203 has threads 209 along a portion of its length, and the enlarged head 206 has means 280 for turning the rod 200. A hex head opening may provide the means 280 for turning the rod 200. A first clamp dog 212 having a threaded aperture 215 therethrough is configured to engage with the clamp rod 200. A first wedge portion 55 protrudes through said open slot 43 when said clamp assembly 61 is inserted into one of said rounded polygonal openings 28. A second clamp dog 221 has an opening 224 configured to receive the body 203 of clamp rod 200 slidably there through. The enlarged portion 206 of the clamp rod 200 engages with the second clamp dog 221 around the opening. A second wedge portion 58 protrudes through said open slot 43 when said clamp assembly 61 is inserted into one of said rounded polygonal openings 28. A spring 227 is disposed around the clamp rod 200 between the second clamp dog 221 and the dividing section 250 (FIG. 9) below the tie bar 46. Spring 228 extends between dividing section 250 and the first clamping dog 212.

Turning to FIG. 10, the work piece 400 has a wedge-shaped channel 409 that is configured to engage with the wedge portion 55 on clamp dog 212 when the clamp dog 212 is moved inward in the direction of arrow 412.

In FIG. 11, the work piece 400 has an indexing aperture 415 on the bottom surface 403 that is configured to receive the locating pin 52. The locating pin 52 is spring biased in the upward direction by biasing member 85 installed in the cavity 73.

The present invention contemplates that many changes and modifications may be made. Therefore, while the presently-preferred form of the work holding device has been shown and described, and several modifications and alternatives discussed, persons skilled in this art will readily appreciate that various additional changes and modifications may be made without departing from the spirit of the invention, as defined and differentiated by the following claims.

### REPRESENTATIVE FEATURES

1. A work holding device for removably attaching work pieces having elongated wedge-shaped channels along two sides thereof and at least one indexing aperture on its bottom surface, said work holding device comprising:
   a main body having a proximal end, a distal end, and a mounting surface disposed between the proximal and distal ends, the body including at least one elongate opening extending transversely therethrough and having a portion that intersects the mounting surface thereby defining at least one open slot in the mounting surface, and at least one locating pin aperture, the at least one locating pin aperture borders a cavity in the body, the cavity is configured to receive a locating pin having a first end and a second end disposed opposite the first end, the first end of the locating pin sized to slidably insert into the at least one indexing aperture of the workpiece;
   a biasing member disposed in the cavity and configured to bias the locating pin in the upward direction;
   at least one clamp assembly insertable into the at least one elongate opening and configured to engage the wedge-shaped channels in the work piece.
2. The device of Clause 1 wherein the clamp assemblies further comprise a clamp rod having a body and an enlarged head, the body having threads along a portion of its length and the enlarged head having means for turning the rod, a first clamp dog having a threaded aperture configured to engage with the threads on the clamp rod and a first wedge portion that protrudes through said open slot when said clamp assembly is inserted into the at least one elongate opening, a second clamp dog having an opening configured to receive the body of clamp rod slidably therethrough, the enlarged portion of the clamp rod engaging with the second clamp dog around the opening and a second wedge portion that protrudes through said open slot when said clamp assembly is inserted into the at least one elongate opening, and a second spring disposed around the clamp rod between the first clamp dog and a dividing section, a third spring disposed around the clamp rod between the dividing section and a second clamp dog.
3. The device of Clause 1, further comprising platforms extending above the mounting surface.
4. The device of Clause 3, wherein when the work piece is mounted on the work holding device, the work piece engages the mounting surface and the platforms.
5. The device of Clause 1, further comprising a tie bar that extends across a portion of the at least one open slot in the mounting surface.
6. The device of Clause 1, wherein the biasing member is a coil spring.
7. The device of Clause 1, wherein the body is constructed of cast iron.
8. The device of Clause 1, wherein at least a portion of the at least one elongate opening is shaped to include the form of a rounded triangle.
9. The device of Clause 1, wherein the at least one locating pin aperture comprises multiple locating pin apertures having different diameters or shapes.
10. The device of Clause 1, wherein the means for turning the rod comprises a hex shaped opening in a head on the clamp rod.
11. The device of Clause 1, further comprising a wall bordering the cavity with a groove defined therein for receiving a retaining ring to prevent the locating pin from exiting the cavity.
12. A work holding device for removably attaching work pieces having elongated wedge shaped channels along two sides thereof and at least one indexing aperture on its bottom surface, said work holding device comprising:
   a main body having a proximal end, a distal end, and a mounting surface disposed between the proximal and distal ends, the body including at least one elongate opening extending transversely therethrough and having a portion that intersects the mounting surface thereby defining at least one open slot in the mounting surface, and at least one locating pin aperture, the at least one locating pin aperture borders a cavity in the body, the cavity is configured to receive a locating pin having a first end and a second end disposed opposite the first end, the locating pin having a shoulder defined between the first end and the second end, the first end of the locating pin sized to slidably insert into the at least one indexing aperture of the workpiece;
   one or more platforms extending above the mounting surface;
   one or more tie bars extending across the plurality of open slots in the mounting surface;
   a biasing member disposed in the cavity and configured to bias the locating pin in the upward direction;
   a retaining ring disposed in the cavity and configured to engage the shoulder on the locating pin to prevent the locating pin from exiting the cavity;
   at least one clamp assembly insertable into the at least one elongate opening and configured to engage the wedge-shaped channels in the work piece; and,
   wherein the at least one elongate opening has a cross-section that includes the shape of a rounded polygon.
13. The device of Clause 12, wherein the clamp assemblies comprise a clamp rod having a body and an enlarged head, the body having threads along a portion of its length and the enlarged head having means for turning the rod, a first clamp dog having a threaded aperture configured to engage with the threads on the clamp rod and a first wedge portion that protrudes through said open slot when said clamp assembly is inserted into one of the openings, a second clamp dog having an opening configured to receive the body of clamp rod slidably therethrough, the enlarged portion of the clamp rod engaging with the second clamp dog around the opening and a second wedge portion that protrudes through said open slot when said clamp assembly is inserted into the at least one elongate opening, and a first spring disposed around the clamp rod between the first clamp dog and a dividing section, a second spring disposed around the clamp rod between the dividing section and a second clamp dog.
14. The device of Clause 13, wherein when the work piece is mounted on the work holding device, the work piece engages the mounting surface and the platforms.
15. The device of Clause 13, wherein the first spring and the second spring are coil springs.
16. The device of Clause 13, wherein the body is constructed of cast iron.
17. The device of Clause 13, wherein the at least one locating pin aperture comprises multiple locating pin apertures having different diameters or shapes.
18. The device of Claim 13, wherein the means for turning the rod comprises a hex shaped opening in a head of the clamp rod.
19. The device of Clause 13, wherein a wall bordering the cavity has a groove defined therein, the groove configured to receive the retaining ring.
20. A work holding device for removably attaching work pieces having elongated wedge shaped channels along two sides thereof and at least one indexing aperture on its bottom surface, said work holding device comprising:
   a main body having a proximal end, a distal end, and a mounting surface disposed between the proximal and distal ends, the body including one or more elongated openings extending transversely therethrough and having a portion that intersects the mounting surface thereby defining one or more open slots in the mounting surface, and one or more locating pin apertures, the one or more locating pin apertures border a cavity in the body, the cavity is configured to receive a locating pin having a first end and a second end disposed opposite the first end, the first end of the locating pin sized to slidably insert into the at least one indexing aperture of the workpiece;
   one or more platforms extending above the mounting surface;
   one or more tie bars extending across the one or more open slots in the mounting surface;
   means for biasing the locating pin in the upward direction;
   means for preventing the locating pin from exiting the cavity;
   means for clamping the work piece to the work holding device, the clamping means insertable into the one or more elongate openings and configured to engage the wedge-shaped channels in the work piece; and,
   wherein the one or more elongate openings have a cross-section that includes the shape of a rounded triangle.

## Claims

1. A work holding device for removably attaching work pieces having elongated wedge-shaped channels along two sides thereof and at least one indexing aperture on its bottom surface, said work holding device comprising:
a main body having a proximal end, a distal end, and a mounting surface disposed between the proximal and distal ends, the body including at least one elongate opening extending transversely therethrough and having a portion that intersects the mounting surface thereby defining at least one open slot in the mounting surface, and at least one locating pin aperture, the at least one locating pin aperture borders a cavity in the body, the cavity is configured to receive a locating pin having a first end and a second end disposed opposite the first end, the first end of the locating pin sized to slidably insert into the at least one indexing aperture of the workpiece;
a biasing member disposed in the cavity and configured to bias the locating pin in the upward direction;
at least one clamp assembly insertable into the at least one elongate opening and configured to engage the wedge-shaped channels in the work piece.

2. The device of Claim 1 wherein the clamp assemblies further comprise a clamp rod having a body and an enlarged head, the body having threads along a portion of its length and the enlarged head having means for turning the rod, a first clamp dog having a threaded aperture configured to engage with the threads on the clamp rod and a first wedge portion that protrudes through said open slot when said clamp assembly is inserted into the at least one elongate opening, a second clamp dog having an opening configured to receive the body of clamp rod slidably therethrough, the enlarged portion of the clamp rod engaging with the second clamp dog around the opening and a second wedge portion that protrudes through said open slot when said clamp assembly is inserted into the at least one elongate opening, and a first spring disposed around the clamp rod between the first clamp dog and a dividing section, a second spring disposed around the clamp rod between the dividing section and a second clamp dog.

3. The device of Claim 1, further comprising platforms extending above the mounting surface.

4. The device of Claim 3, wherein when the work piece is mounted on the work holding device, the work piece engages the mounting surface and the platforms.

5. The device of Claim 1, further comprising a tie bar that extends across a portion of the at least one open slot in the mounting surface.

6. The device of Claim 1, wherein the biasing member is a coil spring.

7. The device of Claim 1, wherein the body is constructed of cast iron.

8. The device of Claim 1, wherein at least a portion of the at least one elongate opening is shaped to include the form of a rounded polygon.

9. The device of Claim 8, wherein the rounded polygon is a triangle.

10. The device of Claim 1, wherein the at least one locating pin aperture comprises multiple locating pin apertures having different diameters or shapes.

11. The device of Claim 1, wherein the means for turning the rod comprises a hex shaped opening in a head on the clamp rod.

12. The device of Claim 1, further comprising a wall bordering the cavity with a groove defined therein for receiving a retaining ring to prevent the locating pin from exiting the cavity.

13. The device of Claim 12, wherein the locating pin has a shoulder defined between the first end and the second end, the retaining ring disposed in the cavity and configured to engage the shoulder on the locating pin to prevent the locating pin from exiting the cavity.

14. The device of Claim 2, wherein the first spring and the second spring are coil springs.
